# EUROPEAN PATENT SPECIFICATION

(11) **EP 2 811 390 B1**
(45) Date of publication and mention of the grant of the patent: **25.10.2017**
(21) Application number: 14171194.5
(22) Date of filing: 04.06.2014
(51) Int. Cl.: G06F 3/0482

(54) **Electronic device and data input system**
Elektronische Vorrichtung und Dateneingabesystem
Dispositif électronique et système d'entrée de données

(30) Priority: 09.06.2013 CN 201310231024; 12.07.2013 US 201313940745
(43) Date of publication of application: 10.12.2014
(73) Proprietor: SAP SE, 69190 Walldorf (DE)
(72) Inventor: Wen, Zhongzhi, 69190 Walldorf (DE)
(74) Representative: Richardt Patentanwälte PartG mbB

(56) References cited:
- WO-A2-2008/033853
- US-B1- 6 266 098
- "android wheel picker demo", , 1 September 2012 (2012-09-01), XP054975496, Retrieved from the Internet: URL:http://www.youtube.com/watch?v=cUGyvYj GkKA [retrieved on 2014-08-27]

## Description

### Field of the invention

### Background and related art

The present disclosure generally relates to electronic devices comprising a data input interface and a corresponding method, and more particularly to a mobile electronic device comprising a user interface.

Various graphical user interfaces and widgets are known in the art which enable a user to enter data and to select one out of a plurality of displayed select option. One example for such a widget is the "android wheel picker widget". A demo of said widget can be watched at the following YouTube URL: https://www.youtube.com/watch?v=cUGyvYjGkKA (1. September 2012, Neji Rezgui).

US 006266098 B1 describes function representation and selection in a multifunction system that supports user selection of system function by means of a menu-driven graphical user interface displaying a rotatable function menu. The rotatable function menu includes a plurality of circumferentially-arrayed facets, each facet representing a respective function of a plurality of functions. The rotatable function menu may be rotated on an axis to place any desired facet at the selection location at which the function represented by the facet may be selected. Selection and configuration of functions and features related to a selected function are provided by display and navigation through one or more submenus.

WO2008/033853 A2 describes methods and systems that improve the way media is played, sorted, modified, stored and catalogued on a portable media player. One aspect relates to an image based browser that allows a user to navigate through and select images that are related to media items.

A typical electronic device, such as a computer, may need a user to input some data via an input detection area (or simply 'input') of the electronic device. The data from a user may include alphanumerical or character information. The alphanumerical or character information may typically include numbers and characters, from various languages of various world regions.

Traditionally, an electronic device may allow the user to input information via a keyboard, real physical or virtual touch screen type. A user on the road working with a mobile electronic device usually does not have a keyboard available and may rather use a virtual touch screen keyboard. However, a virtual touch screen keyboard occupies much of the display screen of the electronic device, and interferes with visual enjoyment and experience of the user interacting with the electronic device. In case of small mobile devices such as smartphones and of complex graphical user interfaces, such as commonly used in industrial control processes, a significant portion of relevant information must be hidden from the user in order to display at least some aspects of the GUI on the small display of the mobile device. Thus, a user is either burdened with a bulky physical keyboard or with a virtual touch screen keyboard that consumes so much space of the screen that relevant information cannot be displayed at all.

Thus, there is a need to implement an electronic device to include a user interface that allows a user to input data efficiently without burdensome keyboards, real or virtual.

### Summary

It is an objective of the present invention to provide for an improved electronic device and corresponding method as specified in the independent claims. Embodiments of the invention are given in the dependent claims. Embodiments of the present invention can be freely combined with each other if they are not mutually exclusive.

An 'input detection area' is an area of a display screen that is capable of detecting some movements of an object over the display screen. Said area may be capable of monitoring the direction and velocity of the movement, the force exerted by the object on the display screen, the acceleration, the current x and y coordinates of the object on the screen, and the like. The area may be restricted by some program logic to a sub-area of a display screen, e.g. a particular section of a touchscreen that may be marked by a particular color or shape.

A GUI element is a data object some of which's attributes specify the shape, layout and/or behavior of an area displayed on a graphical user interface, e.g. a screen.

In one aspect, the invention relates to an electronic device that comprises a display screen, a memory and an input detection area. The display screen displays a user interface. The input detection area is configured for detecting a plurality of positions of an object. The electronic device further comprises a controller that is configured for controlling the display screen to display a data content in response to a plurality of movements of the object.

If the controller determines the object moved in a first direction, the display screen modifies the data content based on a group of data choices. Modifying the data content based on a group of data choices may mean that one data choice of the group of data choices replaces the currently displayed data content, thereby modifying said currently displayed data content. Which one of said data choices is actually used as the new, modified data content may depend on the movement of the object: If the controller determines the object moved in a second direction, the controller stores, into the memory, the data content currently being displayed on the display screen.

This may be advantageous as no real or virtual keyboard is required for entering some data. Rather, the only display space required by the user for controlling the input data may be a comparatively small screen area for moving the object, e.g. the user's finger, in the first and second direction.
That the data content is modified based on a group of data choices may be advantageous, as it helps to avoid typing errors: at the options for data input are predefined, the user is protected from entering the wrong character. This happens quite often in state of the art input systems being based on small virtual keyboards.
The method may be advantageous in particular if many options for a user entry exist: if all options are displayed at the same time on the screen and if the user has to select one of said options directly by touching on a graphical representation of said option, the chances of an erroneous selection are high: each individual graphical representation may be small, and the user might not see the exact point of the GUI element that he or she selects. This is because a direct selection of a GUI element inevitably hides the selected object when the finger of the user has almost reached the GUI element that is to be selected. The proposed indirect selection of available choices by means of a movement along a predefined direction rather than by touching the desired choice directly ensures that the selected item is not hidden by the finger (or any other used selection object) of the user.

According to embodiments, the first direction is parallel to a vertical edge of the display screen. In addition, or alternatively, the second direction is parallel to a horizontal edge of the display screen.

According to embodiments the controller is configured for:
- determining that the object is placed on a first area of the display screen; for example, there may be an area of the GUI that is highlighted in a different color wherein movements of the object over the display screen are recorded and evaluated for determining if the movement comprises a movement in the first and/or second direction;
- in response to said determining, controlling the display screen to display a sequence of GUI elements on a second area of the display screen; each GUI element may act as a placeholder for displaying data content; and
- controlling the display screen to display a selector GUI element on a third area of the display screen. The selector GUI element may be a GUI element that provides visual feedback information on the available data choices selectable as data content for a particular placeholder and that provides visual feedback information on the data choice that would be used as new data content in case the user changes the direction of the movement of the object as specified above.
Using a selector object may be advantageous as said object allows to display information in a separate display area that is not covered and hidden by the object that actually moves over the device screen for executing the selection.

According to embodiments, the first and the second area do not overlap. This may be advantageous as it is ensured that the finger does not hide the option to be selected and also does not hide any data contained in any one of the sequence of GUI elements.

According to other embodiments, the second and the third area overlap or are located next to each other on the screen. For example, the group of available choices for a particular one of the GUI elements in the sequence of GUI elements may be displayed as elements of a selector GUI element. The selector GUI element may be displayed as an overlay of said particular one of the GUI elements. Thus, the user may immediately perceive the relationship of the available set of choices and the GUI element acting as placeholder for one of said available choices.

The selector GUI element may be a graphical representation of a rotatable object on the display screen. Upon the object executing the movement in the first direction, the selector GUI element rotates in accordance with said movement for providing visual feedback information on said movement of the object. For example, the selector GUI element could comprise a surface texture, a gearwheel appearance or the like that results in a graphical representation and display of a rotating 3D whenever the user moves the object in the first direction. The rotatable object may be any object having a three-dimensional shape that is suited for providing visual feedback information when said object is rotated or turned. For example, the rotatable object may be a ball, a cube, a scroll wheel, or the like.

The position and size of the first, second and the third area are calculated automatically by the controller which takes the size of the display screen as input. Said calculation ensures that the selector element does not overlay the one of the GUI elements of the sequence of GUI elements that is currently used for displaying and updating the data content.

According to embodiments, the sequence of GUI elements consists of character positions within a text field. Thus, a text field allowing the input of a 20-character string may consist of a sequence of 20 GUI elements, each GUI element acting as a placeholder that can be filled with a character. This is advantageous as a new, space-saving input method is provided for one of the most common data input fields. By providing a respective GUI element as placeholder for each character position within a text field, any existing text field of a form, e.g. an HTML form can be easily be coupled to the proposed data input method. For example, a rotatable wheel could be displayed next to the text field or as overlay of a currently selected and modified GUI element within the sequence of GUI elements.

Each of said placeholders may be visualized by means of borders or by highlighting the background of said placeholder in a particular colour. In addition or alternatively, each placeholder may constitute an allowable cursor position within the text field or another graphical element for entering data.

According to embodiments, each of the GUI elements of the sequence of GUI elements is of equal size. The controller is configured for:
- determining that any alphanumerical character displayed as data content in any one of said GUI elements is smaller than a predefined minimum size if the whole sequence of GUI elements is displayed on the display screen; and
- automatically zooming into a sub-sequence of the sequence of GUI elements, the subsequence comprising an active GUI element, the active GUI element comprising the data content currently displayed on the display screen, whereby the zooming increases the size of each of the GUI elements of said sub-sequence until said displayed characters are larger than the predefined minimum size.
Upon the storing of the currently displayed data content, the controller is configured for:
- using the GUI element succeeding the active GUI element as the active GUI element;
- shifting the displayed sub-sequence of GUI elements such that the active GUI element is at the center of the screen; and
- shifting the selector GUI element such that the distance between the currently active GUI element and the selector GUI element remains constant.

Zooming into the display and displaying only a sub-sequence of the sequence of GUI element may be advantageous as it is ensured that the characters that are currently presented as available choices and/or the character having already been entered into the text field are of sufficient size.

According to embodiments, the input detection area comprises at least one of a touch sensitive surface, a pressure detector, a light detector, a video camera, a sonic detector, and a magnetic field detector.

According to embodiments the object comprises at least one of a stylus, a user's finger, and a wand.

According to embodiments, if the controller determines the object moved in the second direction, the controller, after storing the data content currently being displayed on the display screen, controls the display screen to display another data content.

According to embodiments the controller is configured for controlling the display screen to display a sequence of GUI elements. Each GUI element acts as a placeholder for displaying data content. The currently displayed data content is displayed in a first one of the GUI elements. The displaying of the other data content comprises displaying the other data content in a second one of the GUI elements, whereby the second one of the GUI elements succeeds the first GUI element.

According to embodiments each of the GUI elements has assigned a different group of data choices. The displaying of the currently displayed data content in the first GUI elements comprises selectively displaying a first group of data choices assigned to the first GUI element on the display screen. If the controller determines the object moved in the first direction, the display screen modifies the data content based on the first group of data choices. The displaying of the other data content in the second GUI elements comprises selectively displaying a second group of data choices assigned to the second GUI element on the display screen. If the controller determines the object moved in the first direction, the display screen modifies the other data content based on the second group of data choices.
For example, the GUI element may have assigned the property 'day-of-month'. As a consequence, the group of data choices generated could consist of a set of numerical values ranging from "1" to "31". If a GUI element has assigned the property 'month', the group of data choices generated for said element could consist of a set of strings ranging from "January" to "December".
Said features may be advantageous for complex input data formats. For example, a date may consist of two positions for the day that respectively require a numerical data content as input, four positions for the year that respectively require a numerical data content, and a month. Depending on the predefined date format, the month may be entered by assigning a group of choices to a single GUI element representing the 'month', whereby said group consists of 12 strings for the month of the year ("January", "February", ..., "December").

According to embodiments only one of the GUI elements is allowed to be selected as active GUI element at a time. Only the group of data choices assigned to the active GUI element is displayed and used as data basis for modifying the data content displayed in the active GUI element. All groups of data choices assigned to any one of the non-active GUI elements are hidden automatically, i.e., they are not displayed unless the GUI element they are assigned to becomes the active GUI element.

According to embodiments, if the controller determines the object moved in a third direction opposite to the second direction, the controller causes the display screen to select one of the GUI elements having been an active GUI element previously. The selection is performed for highlighting the data content of said previously activated GUI element and for modifying the data content displayed in said previously activated GUI element based on the group of data choices assigned to said selected and previously activated GUI element.

According to embodiments, the data content comprises at least one of a text character, a text string representing a phoneme or a syllable of a word, a date, a month, a weekday, a year, and an emoticon.

According to embodiments, the group of data choices is generated by the controller based upon properties of the data content or a previous data content of the user interface. This may be advantageous, as it allows to dynamically determine the one or more data choices which are, given a previously entered data choice, the most relevant options. Only said dynamically determined data choices are displayed. This avoids the hiding of relevant information on a screen of limited size by other data choices which may not be of relevance given a user's previous input.

According to embodiments, the group of data choices is generated by the controller based upon speech recognition of a segment of user speech.

In a further aspect the invention relates to a method for inputting data in an electronic device, the method being implemented by the electronic device and comprising:
- displaying, by a display screen, a user interface;
- detecting, by an input detection area, a plurality of positions of an object; and
- controlling, by a controller, the display screen to display a data content, in response to a plurality of movements of the object,
- wherein if the controller determines the object moved in a first direction, the display screen modifies the data content based on a group of data choices, and
- if the controller determines the object moved in a second direction, the controller stores, into a memory, the data content currently being displayed on the display screen.

### Brief description of the drawings

In the following embodiments of the invention are explained in greater detail, by way of example only, making reference to the drawings in which:
- Figure 1: illustrates an exemplary electronic device with a user interface according an embodiment.
- Figure 2: illustrates an exemplary input movement sequence;
- Figure 3: illustrates an exemplary input process according to an embodiment; and
- Figure 4: illustrates a sequence of GUI elements for receiving some input data and a selector GUI element sliding along said GUI element sequence.

### Detailed description

The present disclosure, through one or more of its various aspects, embodiments and/or specific features or sub-components, is thus intended to bring out one or more of the advantages as specifically noted below.

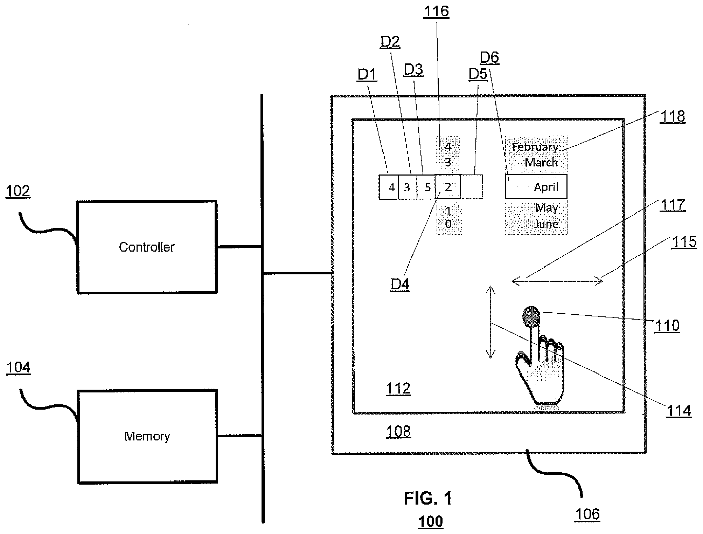

Figure 1 is an exemplary electronic device with a user interface according an embodiment.
The electronic device 100 is generally shown and may include a controller 102, which is generally indicated. The controller 102 may include a Central Processing Unit (CPU) with one or more processing cores, and may be included within, any one or more computers, servers, systems, communication networks or cloud environment. The electronic device 100 may further include a memory 104, a display screen 106, and an input detection area (or 'input') 108, which are connected to the controller 102.

The memory 104 may include a static memory, a dynamic memory, or both. The memory 104 may additionally or alternatively include a hard disk, random access memory, a cache, a computer-readable medium storing instructions for execution in the electronic device 100, or any combination thereof. Of course, those skilled in the art appreciate that the memory 104 may comprise any combination of known memories or a single storage.

The display screen 106 may include, but is not limited to, a cathode ray tube (CRT), a liquid crystal display (LCD), a light projection display (LPD), a plasma display, a light emitting diode (LED) display. The display screen 106 may display a user interface 112. The user interface 112 may be a graphical user interface (GUI).

The input detection area 108 may include, but is not limited to, a touch sensitive surface, a pressure detector, a light detector, a video camera, a sonic detector, and a magnetic field detector, any other device capable of detecting and tracking the position and movement of a portion of an object 110 or a plurality of objects, or any combination thereof. An object 110 to be detected by the input detection area 108 may include one of a stylus, a user's fingers or hands, and a wand, or any other objects that can be detected and tracked by the input detection area 108.

For example, the input detection area 108 may include a touch sensitive surface on the outside surface of the display screen 106, and the input detection area 108 detects and tracks the position and movements of the object 110, which may include the tip of a user's finger. The input detection area 108 may track the position and movements of a user's finger tip as the user touches or moves the finger tip on the touch sensitive surface.

Alternatively, the input detection area 108 may include a video camera that takes video images of a visual field and tracks the movement of a user's finger tip as the user moves the finger tip within the visual field. Alternatively, the input detection area 108 may detect and track the movements of a stylus or a wand.

The controller 102 may control the display screen 106 to display data contents D1-D5, in response to movements of the object 110. For example, if the controller 102 determines the object 110 moved in a first direction 114, the display screen 106 modifies the data content D4 based on a group of data choices 116, and if the controller determines the object moved in a second direction 115, the controller 102 stores, into the memory 104, the data content D4 currently being displayed on the display screen 106.

For example, the controller 102 may control the display screen 106 to display in the user interface 112, a data content D4 along with a group of data choices 116. The group of data choices 116 may be displayed in the form of a scroll wheel with the possible data choices for the data content D4. The group of data choices 116 may be superimposed or overlayed with the data content D4 in the user interface 112, to signify that the data content D4 is the data content currently being selected or being modified by user input. Alternatively, the data content D4 may not be displayed until the user makes a selection from the group of data choices 116 by user input. The group of data choices 116 may be sorted in some logical order, such as alphabetical, ascending or descending, etc.

When the user moves the object 110 in a first direction 114 (here for example, up or down), the display screen 106 may modify the data content D4, by for example scrolling through the possible data choices in group of data choices 116 (here for example, scrolling through numbers 0-9). Thus, the user may scroll through the possible data choices to select the desired data for data content D4 (here for example, the number 2).

If the controller 102 determines that there has not yet been any movements of the object 110, in one or more directions, the controller 110 may decide that there is no need for a specific data content, i.e. the data content D4 may be empty or may be the end of the group of data contents being inputted from the user. In such a case, the controller 102 may cause the display screen 106 to not display the group of data choices 116 at all.

When the user has selected the desired data for data content D4, the user may "commit" the data for data content D4, by moving the object 110 in a second direction 115 (here for example, to the right). The controller 102 in response to this movement, stores, into the memory 104, the data content D4 currently being displayed (here for example, the number 2) on the display screen 106.

Thus, the data content D4 may be inputted by the user via the above described two movements and tracking by the electronic device 100.

After the data content D4 is inputted by the user by the above movements and tracking by the electronic device 100, the electronic device 100 may further track the movements of the object 110 for the next data content D5, or a different data content D6 (here, for example, for a month data field entry, to be selected from a group of data choices of months 118).

The user may commit or finalize the entire group of data contents D1-D4, after a sequence of movements of the object 110 by the user, by lifting the object 110 from the touch sensitive surface of the input detection area 108.

The user may wish to go back to change the previously committed/ saved data content D4. To do so, the user may move the object 110 in a third direction 117 (here for example, to the left) opposite to the second direction 115. The controller 102, in response to this movement of the object 110, may "de-commit" the previously committed/ saved data content D4. Once data content D4 is de-committed, the controller 102 may control the display screen 106 to display and modify the data content D4 according to the above described movements of the object 110 by the user, and then may re-commit data content D4.

The user may go further back to other previously committed/ saved data contents D1D3 for further modification. While doing so, the controller 102 and the display screen 106 may or may not discard any current selections in data contents D4-D5.

The above sequences of input movements may be performed with the object 110 touching and moving on a touch sensitive surface of the input detection area 108, to input multiple data contents D1-D5 of numbers or characters without lifting the object 110 from the touch sensitive surface of the input detection area 108.

While the above example movements are described as relating to the input of individual alphanumerical characters, similar input sequences may be used to input groups of alphanumerical characters, such as the names of months in data content D6.

Additionally, groups of alphabetical characters in the forms of phonemes or syllables of words may be presented in the group of data choices, determined based upon dictionary, grammar, and/ or autocomplete features and previous data contents in the electronic device 100. For example, if the user has already inputted the alphabets "typ" in previous data contents D1-D3, the controller 102 may determine from the data contents D1-D3 and dictionary, possible multiple character data choices for D4: "e," "ed," "es," "ing," "ist," and etc. The controller 102 then may control the display screen 106 to present these multiple character data choices for D4 in the form of a scroll wheel in the user interface 112. In doing so, the user can input multiple characters in a single data content in one time, while limiting the number of possible data choices for a single data content down to a manageable size.

Additionally, context or property of a data content may also limit the number of possible data choices for the data content. For example, if D1's property or context indicates that it should contain the number to represent the hour number of a time value, then there are only 24 possible numerical values as data choices for D1. Additionally, the user interface 112 environment may contain information for possible data choices. For example, if the data contents D1-D4 are for a specific data field in a webpage, the webpage may already contain limited number of possible data choices for the data contents D1-D4. The controller 102 may determine the possible data choices received from the webpage (i.e. external data), and use these data choices to be displayed in the group of data choices 116.

Furthermore, input of data contents D1-D5 may be further aided by limiting data choices via other ways, for example, by speech recognition or handwriting. For example, the electronic device 100 may perform speech recognition on a segment of audio speech, and the controller 102 may generate a group of data choices 116 that are the words most closely corresponding to the phonemes in the segment of audio speech. For example, the user may speak a word into a microphone (not shown) connected to the electronic device 100. The controller 102 then analyzes the spoken word, and determines five to ten best matching words in a dictionary or a database, and then uses the five to ten matching words as the group of data choices 116 for the user to select as a data content D1-D4.

Speech recognition traditionally presents a fairly rapid way for a user to input data.

However, speech recognition can be very inaccurate, given similarities in some phonemes and some speech anomalies in individual users. By combining speech recognition with the rapid movement input process of the present disclosure, the user may use speech recognition to limit data choices to speed up the movement input process, while the movement input process of the present disclosure to compensate for inaccuracies in the speech recognition input process.

Additionally, the controller 102 may track and correlate results of speech recognition and the movement input process of the present disclosure, and use the historical results and performance information to improve the performance of speech recognition over time.

While the movements described above are described in directions as relative to the display screen 106 and its orientation, it is also possible for the electronic device 100 to track the movements of the object 110 as relative to one or more of the user's body orientation, a viewer's orientation, a video projection screen, the direction of gravity, the edge of another object, and etc. Additionally, the movements may be additionally tracked in other directions (for example, in and out), to allow the user to interact and select additional data choices for a data content. For example, moving the object 110 in the "in or out" direction may cause the display screen 106 to switch the property or the type of a data contents D1-D5, such as from alphabets to numbers, or to switch format of the data contents, from numbers in Roman numeral or in hexadecimal.

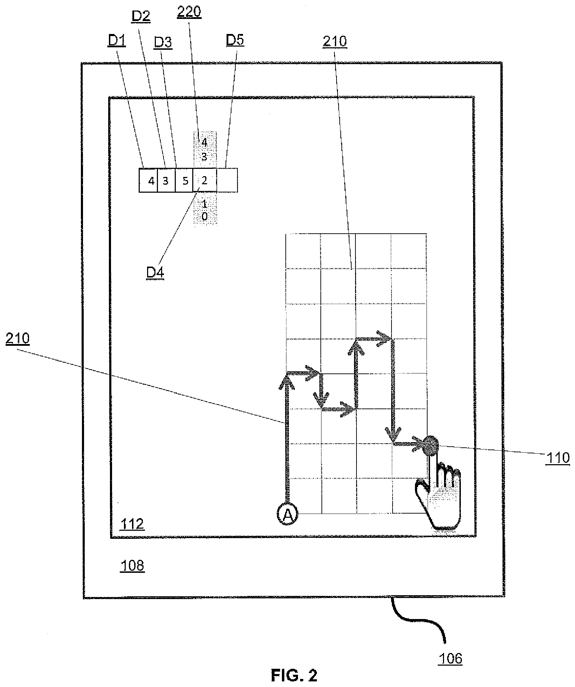

Figure 2 illustrates an exemplary input movement sequence 200 for data contents D1D4, according to an embodiment.

The controller 102 may detect and track the position and movements of the object 110, as the user touches and moves the object 110 on the sensitive surface of the input detection area 108. The display screen 106 may display the data content D1-D5.

The user may begin the sequence by touching the object 110 down on the touch sensitive surface of the input detection area 108, at an initial point A. When the user touches the object 110 down at initial point A, the controller 102 may determine that the movement input process has begun, selects a data content D1 for input, and control the display screen 106 to display group of possible data choices for D1. For example, the controller 102 may determine that data contents D1-D5 are to contain numbers, and possible data choices for each of data contents D1-D5 would be numbers 0-9. The controller 102 may control the display screen 106 to display the possible data choices in the form of a scroll wheel 220 containing the numbers 0-9.

The controller 102 may track the position and movements of the object 110, relative to a movement grid 210, which may be predefined by the controller 102 or the input detection area 108 or the display screen 106 according to units of dimensions. Here for example, the movement grid 210 is shown as having 8 units in the Y-dimension (Up-Down direction) parallel to a vertical edge of the display screen 106, and 4 units in the X-dimension (Left-Right direction) parallel to a horizontal edge of the display screen 106.

For simplicity and to avoid interfering with the user's visual experiences of the user interface, the movement grid 210 may be not displayed on display screen 106. Alternatively, for accuracy of user input, the movement grid 210 may be displayed on display screen 106. Or, the controller 102 may decide whether to display the movement grid 210 according to a user setting in the electronic device 100.

Additionally, the movement grid 210 may be aligned vertically or horizontally to an initial point A, set at where the user initially "touch down" the object 110 on the touch sensitive surface of the input detection area 108. Via this alignment of the movement grid 210, the user may effectively initiate the movement input process from anywhere on the touch sensitive surface of the input detection area 108. Additionally, the movement grid may be resized with different unit of dimensions as needed by the number of possible data choices 116, so to avoid where the object 110 is forced outside of the detection range of the input detection area 108 (i.e. the edges of the touch screen).

Additionally, the alignment may be done to offset or compensate for the initial position A. For example, if the initial position A is on the right half side of the touch sensitive surface of the input detection area 108, then the horizontal unit of dimension of the movement grid 210 may be decreased to compensate for the offset of the initial position A.

This may be considered as referencing the position of the object 110 relative to the initial position A.

As exemplarily shown in Figure 2, the user may move the object 110 from initial position A in the up direction by 4 units. Interactively, in response to the movement of the object 110 in the up direction, the display screen 106 displays the scroll wheel 220 spinning or scrolling, and showing the data content D1 as changing from 0 to 1, to 2, to 3, then to 4, corresponding to the changing position of the object 110 relative to and on the movement grid 210 (along the Y-dimension).

Next, the user may move the object 110 in the right direction by 1 unit. Interactively, in response to the movement of the object 110 in the right direction, the controller 102 commits the data (the number 4) currently being displayed for data content D1 by saving the data of the data content D1 into memory 104. Then, the display screen 106 may displays the scroll wheel 220 as shifted to the right direction by 1 digit place, while maintaining display of the data content D1, to signify that data content D1 is committed and that data content D2 is ready for input. In shifting the scroll wheel 220 to the right direction by 1 digital place, the scroll wheel 220 may maintain its data value from the data content D1 (the number 4). This is because the position of the object 110 in the Y-dimension on the movement grid 210 is still 4 units from the initial position A.

Next, the user may move the object 110 in the down direction by 1 unit, to a position of 3 units from initial point A in the Y-dimension. Interactively, in response to the movement of the object 110 in the down direction, the display screen 106 displays the scroll wheel 220 spinning or scrolling, and showing the data content D2 as changing from 4 to 3, corresponding to the changing position of the object 110 relative to and on the movement grid 210 (along the Y-dimension).

Next, the user may move the object 110 in the right direction by 1 unit. Interactively, in response to the movement of the object 110 in the right direction, the controller 102 commits the data (the number 3) currently being displayed for data content D2 by saving the data of the data content D2 into memory 104. Then, the display screen 106 may display the scroll wheel 220 as shifted to the right direction by 1 digit place, while maintaining display of the data content D2, to signify that data content D2 is committed and that data content D3 is ready for input. In shifting the scroll wheel 220 to the right direction by 1 digital place, the scroll wheel 220 may maintain its data value from the data content D2 (the number 3). This is because the position of the object 110 in the Y-dimension on the movement grid 210 is still 3 units from the initial position A.

Next, the user may move the object 110 in the up direction by 2 units, to a position of 5 units from initial point A in the Y-dimension. Interactively, in response to the movement of the object 110 in the up direction, the display screen 106 displays the scroll wheel 220 spinning or scrolling, and showing the data content D3 as changing from 3 to 4, then to 5, corresponding to the changing position of the object 110 relative to and on the movement grid 210 (along the Y-dimension).

Next, the user may move the object 110 in the right direction by 1 unit. Interactively, in response to the movement of the object 110 in the right direction, the controller 102 commits the data (the number 5) currently being displayed for data content D3 by saving the data of the data content D3 into memory 104. Then, the display screen 106 may display the scroll wheel 220 as shifted to the right direction by 1 digit place, while maintaining display of the data content D3, to signify that data content D3 is committed and that data content D4 is ready for input. In shifting the scroll wheel 220 to the right direction by 1 digital place, the scroll wheel 220 may maintain its data value from the data content D3 (the number 5). This is because the position of the object 110 in the Y-dimension on the movement grid 210 is still 5 units from the initial position A.
Next, the user may move the object 110 in the down direction by 3 units, to a position of 2 units from initial point A in the Y-dimension. Interactively, in response to the movement of the object 110 in the down direction, the display screen 106 displays the scroll wheel 220 spinning or scrolling, and showing the data content D4 as changing from 5 to 4, to 3, then to 2, corresponding to the changing position of the object 110 relative to and on the movement grid 210 (along the Y-dimension).

Next, the user may move the object 110 in the right direction by 1 unit. Interactively, in response to the movement of the object 110 in the right direction, the controller 102 commits the data (the number 2) currently being displayed for data content D4 by saving the data of the data content D4 into memory 104. Then, the display screen 106 may displays the scroll wheel 220 as shifted to the right direction by 1 digit place, while maintaining display of the data content D4, to signify that data content D4 is committed and that data content D5 is ready for input. In shifting the scroll wheel 220 to the right direction by 1 digital place, the scroll wheel 220 may maintain its data value from the data content D4 (the number 2). This is because the position of the object 110 in the Y-dimension on the movement grid 210 is still 2 units from the initial position A.

At this point, data contents D1-D4 are inputted by the above movement and tracking process, and data content D5 may be ready for input.

The above movements may be referenced to a movement grid 210, to determine the distance of each movement along the X and Y dimensions. However, such an implementation may be too tolerant, and may erroneously interpret and respond to certain movements, for example, diagonal movements. This may be due to the measurement referenced to initial point A.

To prevent erroneous interpretation of the movements of the object 110, the controller may track only movements of the object 110 in the X and Y dimensions, and may selectively ignore any movements of the object 110 that do not meet some threshold criteria, for example, tracking the movements of the object 110 referenced based on a prior turning point, and ignoring any movements that are not along the X and Y dimensions (within a certain angle range).

Alternatively, above described response to tracking of up and down movements may not need to be based upon number of units of movements, but may be based a joystick style control response process. For example, the controller 102 may respond to any up or down displacement of object 110 from initial point A to begin to scroll the scroll wheel 220, and stop scrolling the scroll wheel 220 when the object 110 returns to initial point A. Or, the controller 102 may respond to any up or down displacement of object 110 from initial point A to scroll the scroll wheel 220 by a set amount or a set number of data choices, the user may then return the object 110 back to initial point A, and then move the object 110 again in the up and down direction to cause the controller 102 to respond to scroll the scroll wheel 220 again by a set amount or a set number of data choices, in a pulsed movement fashion.

The electronic device 100, or portions thereof, may be implemented as, or incorporated into, various devices, such as a personal computer, a tablet computer, a set-top box, a personal digital assistant, a mobile device, a palmtop computer, a laptop computer, a desktop computer, a communications device, a wireless telephone, a personal trusted device, a web appliance, or any other machine capable of executing a set of instructions (sequential or otherwise) that specify actions to be taken by that device. Further, while a single electronic device 100 is illustrated, addition embodiments may include any collection of systems or sub-systems that individually or jointly execute instructions or perform functions.

The electronic device 100 may be in communication with one or more additional computer a network, which may be, but is not limited to, a local area network, a wide area network, the Internet, a telephony network, or any other network commonly known and understood in the art.

Of course, those skilled in the art appreciate that the above-listed components of the electronic device 100 are merely meant to be exemplary and are not intended to be exhaustive and/or inclusive. Furthermore, the examples of the components listed above are also meant to be exemplary and similarly are not meant to be exhaustive and/or inclusive.

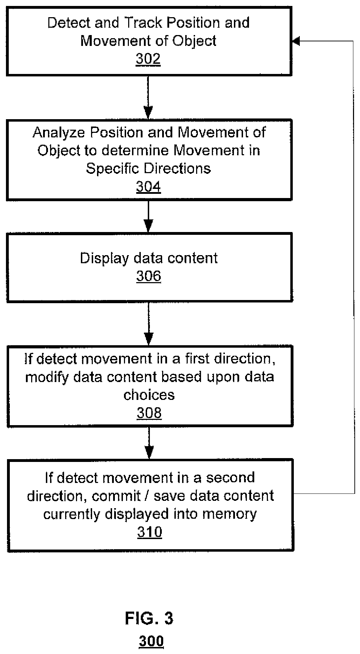

Figure 3 illustrates an exemplary input method 300 according to an embodiment. Process 300 starts at step 302, the input detection area 108 may detect and track position and movement of object 110, and the process 300 may proceed to step 304.

At step 304, the controller 102 may analyze position and movement of object 110, and detect for specific patterns of movement, for example in specific directions.

At step 306, the display screen 106 may display data contents. At step 308, if the controller 102 determines the object 110 moved in a first direction, the display screen 106 modifies the data content based on a group of data choices.

At step 310, if the controller 102 determines the object 110 moved in a second direction, the controller 102 stores, into the memory 104, the data content currently being displayed on the display screen 106, and proceed to step 302.

Although the disclosure has been described with reference to several exemplary embodiments, it is understood that the words that have been used are words of description and illustration, rather than words of limitation. Changes may be made within the purview of the appended claims, as presently stated and as amended, without departing from the scope and spirit of the disclosure in its aspects. Although the disclosure has been described with reference to particular means, materials and embodiments, the disclosure is not intended to be limited to the particulars disclosed; rather the disclosure extends to all functionally equivalent structures, methods, and uses such as are within the scope of the appended claims.

While the computer-readable medium may be described as a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the embodiments disclosed herein.

The computer-readable medium may comprise a non-transitory computer-readable medium or media and/or comprise a transitory computer-readable medium or media. In a particular non-limiting, exemplary embodiment, the computer-readable medium can include a solid-state memory such as a memory card or other package that houses one or more nonvolatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. Accordingly, the disclosure is considered to include any computer-readable medium or other equivalents and successor media, in which data or instructions may be stored.

Although the present application describes specific embodiments which may be implemented as code segments in computer-readable media, it is to be understood that dedicated hardware implementations, such as application specific integrated circuits, programmable logic arrays and other hardware devices, can be constructed to implement one or more of the embodiments described herein. Applications that may include the various embodiments set forth herein may broadly include a variety of electronic and computer systems. Accordingly, the present application may encompass software, firmware, and hardware implementations, or combinations thereof.

The present specification describes components and functions that may be implemented in particular embodiments with reference to particular standards and protocols, the disclosure is not limited to such standards and protocols. Such standards are periodically superseded by faster or more efficient equivalents having essentially the same functions. Accordingly, replacement standards and protocols having the same or similar functions are considered equivalents thereof.

The illustrations of the embodiments described herein are intended to provide a general understanding of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive. One or more embodiments of the disclosure may be referred to herein, individually and/or collectively, by the term "disclosure" merely for convenience and without intending to voluntarily limit the scope of this application to any particular disclosure or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description.

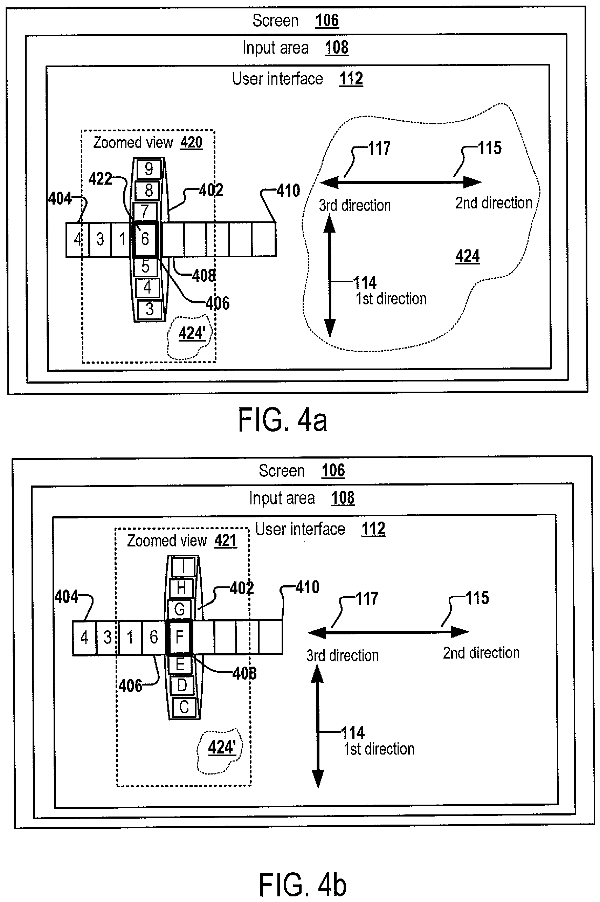

Figure 4 shows a user interface 112 comprising a sequence of GUI elements in greater detail.

Figure 4a displays a sequence 410 of nine GUI elements that respectively act as a placeholder for allowing a user to enter data content into a currently active GUI element based on a group of data choices displayed in a selector GUI element 402. The first three GUI elements of said sequence already comprise some data content that was entered by the user by means of the selector GUI element previously: the number "4" for the first GUI element 404, the number "3" for the second GUI element and the number "1" for the third GUI element of said sequence. The fourth GUI element 406 is the currently active GUI element. This is illustrated by the thick border of said element.

The current data content "6" 422 of the currently active GUI element 406 can be modified by a user moving his finger or another object along a first direction 114. The selector GUI element is displayed on an area of the screen that is not used by the user for moving the object in the first or second direction. This helps avoiding that the object, e.g. the user's finger, overlaps with and hides the available data choices. For example, if the user moves his finger on the display area 424 upwards on the screen, the selector GUI element that is a graphical representation of a rotatable wheel will perform a rotation movement. While performing the movement, the number "6" may be replaced by number "7". If the user moves his or her finger on the display area 424 downwards on the screen, the number "6" will be replaced by number "5". The user may confirm the currently displayed data content "6" by moving his finger in the second direction 115. This will also cause a shifting movement of the selector GUI element 402 along the sequence 410 of GUI elements to the right.

Each of the GUI elements within the sequence 410 of GUI elements may have assigned a group of selectable choices. For example, the numbers displayed by the selector GUI element 402 may constitute the data choices being assigned to GUI element 406. The group of choices assigned to other GUI elements, for example to element 408 or 404, may be identical or may differ from the group of choices assigned to GUI element 406.

As a result of the shifting of the selector GUI element, as displayed in figure 4b, GUI element 408 becomes the currently active GUI element within the sequence 410 of GUI elements. GUI element 408 may have assigned a different group of choices: instead of numerical values, the selector GUI element 402 may display the group of choices assigned to element 408, whereby said group consists of characters of the Roman alphabet. Instead of a wheel 402, other kinds of 3D shapes that provide a three-dimensional impression and that provide some visual feedback on the movement of the user's finger along the first direction can be used.

Figures 4a and 4b also comprise a dotted box which demonstrate how a zoomed view 420, 421 would look like (however, neither 4a nor 4b actually show the zoomed view because all elements within the sequence of elements 410 are displayed on the screen). In case the controller would determine that the screen 106 of the electronic device is very small, and that not all GUI elements 410 and their respective data content can be displayed with sufficient size, only a sub-sequence of the elements in sequence 410 are displayed in the user interface 112, thereby using the whole available size of the user interface 112 for displaying the sub-sequence. For example, said sub-sequence may comprise two GUI elements to the left and two GUI elements to the right of the currently active GUI element. In this case, the area 420 used for moving the finger of the user along the first, second or first direction would be repositioned in order to ensure that area 424/424' is part also of the zoomed view 420, 421. Using the described zoomed view 420, 421 alone or in combination with a selector GUI element 402 has the advantage that all available choices at a given input position can be displayed to a user in sufficient size also on very small screens. The displaying of said options would not be possible if, for example, a virtual keyboard would have to be displayed also on that size.

According to some embodiments, the area 424 used for moving a user's finger or another object over the user interface 112 may be significantly smaller than in the area consumed by the selector element 402 that comprises and displays the available group of choices. This may be advantageous because very small movements of the finger over a very small area may result in a significant movement of the selector wheel 402 and thus to a very clear visual feedback also of small movements. For example, a movement of a finger along a distance of 5 mm could be translated into a rotating movement of the selector GUI element, whereby each choice displayed on the selector GUI element is moved more than 10 mm over the screen. This is particularly helpful for small display sizes with limited space for finger movements.

## Claims

1. An electronic device (100), comprising:
- a display screen (106) displaying a user interface (112);
- a memory (104);
- an input detection area (108), the input detection area being configured for detecting a plurality of positions of an object (110), wherein the input detection area comprises a touch sensitive surface, wherein the object comprises at least one of a stylus, a user's finger, and a wand; and
- a controller (102), the controller being configured for controlling the display screen to display a data content in response to a plurality of movements of the object,
o wherein if the controller determines the object moved in a first direction (114), the display screen modifies the data content based on a group of data choices (116), and
o if the controller determines the object moved in a second direction (115), the controller stores, into the memory, the data content currently being displayed on the display screen; and
wherein the controller (102) is further configured for:
- aligning a predefined movement grid (210) vertically or horizontally to an initial point A, the initial point being a point where the user initially touched down the object (110) on the touch sensitive surface of the input detection area (108), whereby said alignment enables a user to initiate the movement input process from anywhere on the touch sensitive surface of the input detection area (108), the movement grid being predefined by the controller (102) or the input detection area (108) or the display screen (106) according to units of dimensions, the movement grid being shown as having a first number of units in the Y-dimension parallel to a vertical edge of the display screen (106), and a second number of units in the X-dimension parallel to a horizontal edge of the display screen, the movement grid being resized with a unit of dimension as needed by the number of data choices of the group of data choices (116, 118) so to avoid the object (110) being forced outside of a detection range of the input detection area (108),
- tracking the position and movements of the object (110) relative to the movement grid (210), the movement of the object along a predefined direction enabling a user to indirectly select one data choice of the group of data choices (116); controlling, in response to determining that the object moved in the second direction, the display screen to display a further group of data choices for modifying another data content.

2. The electronic device of claim 1, wherein the first direction is parallel to a vertical edge of the display screen and/or wherein the second direction is parallel to a horizontal edge of the display screen.

3. The electronic device of any one of the previous claims, wherein the controller is configured for:
- determining that the object is placed on a first area of the display screen;
- in response to said determining, controlling the display screen to display a sequence of GUI elements on a second area of the display screen, each GUI element acting as a placeholder for displaying data content; and controlling the display screen to display a selector GUI element on a third area of the display screen;
- wherein the selector GUI element is a graphical representation of a rotatable object on the display screen;
- wherein upon the object executing the movement in the first direction, the selector GUI element rotates in accordance with said movement for providing visual feedback information on said movement of the object; and
- wherein the position of the first, second and the third area are calculated automatically by the controller, thereby using the size of the display screen as input, the calculation ensuring that the selector element does not overlay the one of the GUI elements of the sequence of GUI elements that is currently used for displaying and updating the data content.

4. The electronic device of claim 3, wherein each of the GUI elements of the sequence of GUI elements is of equal size and wherein the controller is configured for:
- determining that any alphanumerical character displayed as data content in any one of said GUI elements is smaller than a predefined minimum size if the whole sequence of GUI elements is displayed on the display screen;
- automatically zooming into a sub-sequence of the sequence of GUI elements, the subsequence comprising an active GUI element, the active GUI element comprising the data content currently displayed on the display screen, whereby the zooming increases the size of each of the GUI elements of said sub-sequence until said displayed characters are larger than the predefined minimum size;
upon the storing of the currently displayed data content:
- using the GUI element succeeding the active GUI element as the active GUI element;
- shifting the displayed sub-sequence of GUI elements such that the active GUI element is at the center of the screen; and
- shifting the selector GUI element such that the distance between the currently active GUI element remains constant.

5. The electronic device of any one of the previous claims, wherein the group of data choices (116) differs from the further group of data choices (118).

6. The electronic device of any one of the previous claims, wherein the controller is configured for controlling the display screen to display a sequence of GUI elements, each GUI element acting as a placeholder for displaying a respective data content, wherein the currently displayed data content is displayed in a first one of the GUI elements, wherein the displaying of the other data content comprises displaying the other data content in a second one of the GUI elements, the second one of the GUI elements succeeding the first GUI element.

7. The electronic device of any one of claims 3-6,
- wherein each of the GUI elements of the sequence of GUI elements has assigned a different group of data choices;
- wherein the displaying of the currently displayed data content in the first GUI elements comprises selectively displaying a first group of data choices assigned to the first GUI element on the display screen, wherein if the controller determines the object moved in the first direction, the display screen modifies the data content based on the first group of data choices;
- wherein the displaying of the other data content in the second GUI elements comprises selectively displaying a second group of data choices assigned to the second GUI element on the display screen, wherein if the controller determines the object moved in the first direction, the display screen modifies the other data content based on the second group of data choices.

8. The electronic device of any one of claims 3-6,
- wherein only one of the GUI elements of the sequence of GUI elements is allowed to be selected as the active GUI element at a time;
- wherein only the group of data choices assigned to the active GUI element is displayed and used as data basis for modifying the data content displayed in the active GUI element; and
- wherein all groups of data choices assigned to any one of the non-active GUI elements are hidden.

9. The electronic device of any one of claims 3-8, wherein if the controller determines the object moved in a third direction opposite to the second direction, the controller causes the display screen to select one of the GUI elements having been an active GUI element previously, the selection being performed for highlighting the data content of said previously activated GUI element and for modifying the data content displayed in said previously activated GUI element based on the group of data choices assigned to said selected and previously activated GUI element.

10. The electronic device of any one of the previous claims, wherein the data content comprises at least one of a text character, a text string representing a phoneme or a syllable of a word, a date, a month, a weekday, a year, and an emoticon.

11. The electronic device of any one of the previous claims, wherein the group of data choices is generated by the controller based upon properties of the data content or a previous data content of the user interface.

12. The electronic device of any one of the previous claims, wherein the group of data choices is generated by the controller based upon speech recognition of a segment of user speech.

13. A method for inputting data in an electronic device, the method being implemented by the electronic device and comprising:
- displaying, by a display screen (106), a user interface (112);
- aligning a predefined movement grid (210) vertically or horizontally to an initial point A, the initial point being a point where a user initially touched down an object (110) on a touch sensitive surface of an input detection area (108), whereby said alignment enables a user to initiate a movement input process from anywhere on the touch sensitive surface of the input detection area (108), the movement grid being predefined by a controller (102) or the input detection area (108) or the display screen (106) according to units of dimensions, the movement grid being shown as having a first number of units in the Y-dimension parallel to a vertical edge of the display screen (106), and a second number of units in the X-dimension parallel to a horizontal edge of the display screen, the movement grid being resized with a unit of dimension as needed by the number of data choices of a group of data choices (116) so to avoid the object (110) being forced outside of a detection range of the input detection area;
- detecting, by an input detection area (108), a plurality of positions of the object (110), wherein the input detection area comprises a touch sensitive surface, wherein the object comprises at least one of a stylus, a user's finger, and a wand;
- tracking a position and movements of the object (110) relative to the movement grid (210), the movement of the object along a predefined direction enabling a user to indirectly select one data choice of the group of data choices (116), and
- controlling, by the controller (102), the display screen to display a data content, in response to a plurality of movements of the object,
- wherein if the controller determines the object moved in a first direction (114), the display screen modifies the data content based on a group of data choices (116), and
- if the controller determines the object moved in a second direction (115), the controller stores, into a memory (104), the data content currently being displayed on the display screen and controls the display screen to display a further group of data choices for modifying another data content.

## Patentansprüche

1. Elektronische Vorrichtung (100), die Folgendes aufweist:
- einen Anzeigeschirm (106), der eine Benutzeroberfläche (112) anzeigt;
- einen Speicher (104);
- eine Eingabeerkennungsfläche (108), wobei die Eingabeerkennungsfläche zum Erkennen einer Vielzahl von Positionen eines Objekts (110) konfiguriert ist, wobei die Eingabeerkennungsfläche eine berührungsempfindliche Oberfläche aufweist, wobei das Objekt wenigstens eines von einem Eingabestift, einem Finger eines Benutzers und einem Stab umfasst; und
- einen Controller (102), wobei der Controller zum Steuern des Anzeigeschirms zum Anzeigen eines Dateninhalts als Reaktion auf eine Vielzahl von Bewegungen des Objekts konfiguriert ist,
o wobei, wenn der Controller bestimmt, dass sich das Objekt in einer ersten Richtung (114) bewegte, der Anzeigeschirm den Dateninhalt auf Basis einer Gruppe von Datenwahlmöglichkeiten (116) modifiziert; und,
o wenn der Controller bestimmt, dass sich das Objekt in einer zweiten Richtung (115) bewegte, der Controller den aktuell auf dem Anzeigeschirm angezeigten Dateninhalt in den Speicher abspeichert; und
wobei der Controller (102) ferner konfiguriert ist zum:
- vertikalen oder horizontalen Ausrichten eines vordefinierten Bewegungsrasters (210) auf einen Anfangspunkt A, wobei der Anfangspunkt ein Punkt ist, an dem der Benutzer das Objekt (110) zuerst auf der berührungsempfindlichen Oberfläche der Eingabeerkennungsfläche (108) aufsetzte, so dass die genannte Ausrichtung einen Benutzer zum Einleiten des Bewegungseingabeprozesses von irgendwo auf der berührungsempfindlichen Oberfläche der Eingabeerkennungsfläche (108) befähigt, wobei das Bewegungsraster von dem Controller (102) oder der Eingabeerkennungsfläche (108) oder dem Anzeigebildschirm (106) gemäß Dimensionseinheiten vordefiniert ist, wobei das Bewegungsraster als eine erste Anzahl von Einheiten in der Y-Dimension parallel zu einer vertikalen Kante des Anzeigeschirms (106) und eine zweite Anzahl von Einheiten in der X-Dimension parallel zu einer horizontalen Kante des Anzeigeschirms aufweisend gezeigt wird, wobei die Größe des Bewegungsrasters mit einer Dimensionseinheit wie von der Anzahl von Datenwahlmöglichkeiten der Gruppe von Datenwahlmöglichkeiten (116, 118) benötigt geändert wird, um zu vermeiden, dass das Objekt (110) aus dem Erkennungsbereich der Eingabeerkennungsfläche (108) gezwungen wird,
- Verfolgen der Position und Bewegungen des Objekts (110) relativ zum Bewegungsraster (210), wobei die Bewegung des Objekts entlang einer vordefinierten Richtung einen Benutzer zum indirekten Auswählen einer Datenwahlmöglichkeit der Gruppe von Datenwahlmöglichkeiten (116) befähigt;
Steuern des Anzeigeschirms, als Reaktion auf das Bestimmen, dass das Objekt sich in der zweiten Richtung bewegte, zum Anzeigen einer weiteren Gruppe von Datenwahlmöglichkeiten zum Modifizieren eines weiteren Dateninhalts.

2. Elektronische Vorrichtung nach Anspruch 1, wobei die erste Richtung parallel zu einer vertikalen Kante des Anzeigeschirms ist und/oder wobei die zweite Richtung parallel zu einer horizontalen Kante des Anzeigeschirms ist.

3. Elektronische Vorrichtung nach einem der vorhergehenden Ansprüche, wobei der Controller konfiguriert ist zum:
- Bestimmen, dass das Objekt auf eine erste Fläche des Anzeigeschirms gesetzt wird;
- als Reaktion auf das genannte Bestimmen Steuern des Anzeigeschirms zum Anzeigen einer Folge von GUI-Elementen auf einer zweiten Fläche des Anzeigeschirms, wobei jedes GUI-Element als ein Platzhalter zum Anzeigen von Dateninhalt wirkt; und
Steuern des Anzeigeschirms zum Anzeigen eines Selektor-GUI-Elements auf einer dritten Fläche des Anzeigeschirms,
- wobei das Selektor-GUI-Element eine graphische Darstellung eines drehbaren Objekts auf dem Anzeigeschirm ist;
- wobei beim Ausführen der Bewegung in der ersten Richtung durch das Objekt das Selektor-GUI-Element sich gemäß der genannten Bewegung dreht, um visuelle Feedbackinformationen über die genannte Bewegung des Objekts bereitzustellen; und
- wobei die Position der ersten, der zweiten und der dritten Fläche vom Controller automatisch berechnet werden, dabei die Größe des Anzeigeschirms als Eingabe verwendet wird, wobei die Berechnung sicherstellt, dass das Selektorelement das eine der GUI-Elemente der Folge von GUI-Elementen nicht überlagert, das aktuell zum Anzeigen und Aktualisieren des Dateninhalts verwendet wird.

4. Elektronische Vorrichtung nach Anspruch 3, wobei jedes der GUI-Elemente der Folge von GUI-Elementen die gleiche Größe hat und wobei der Controller konfiguriert ist zum:
- Bestimmen, dass jedwedes in einem der genannten GUI-Elemente als Dateninhalt angezeigte alphanumerische Zeichen kleiner als eine vordefinierte Mindestgröße ist, wenn die ganze Folge von GUI-Elementen auf dem Anzeigeschirm angezeigt wird;
- automatischen Einzoomen in eine Teilfolge der Folge von GUI-Elementen, wobei die Teilfolge ein aktives GUI-Element aufweist, wobei das aktive GUI-Element den aktuell auf dem Anzeigeschirm angezeigten Dateninhalt aufweist, wodurch das Zoomen die Größe von jedem der GUI-Elemente der genannten Teilfolge vergrößert, bis die genannten angezeigten Zeichen größer als die vorbestimmte Mindestgröße sind;
beim Speichern des aktuell angezeigten Dateninhalts:
- Verwenden des auf das aktive GUI-Element folgenden GUI-Elements als das aktive GUI-Element;
- Verschieben der angezeigten Teilfolge von GUI-Elementen, so dass sich das aktive GUI-Element in der Mitte des Schirms befindet; und
- Verschieben des Selektor-GUI-Elements, so dass der Abstand zwischen dem aktuell aktiven GUI-Element konstant bleibt.

5. Elektronische Vorrichtung nach einem der vorhergehenden Ansprüche, wobei die Gruppe von Datenwahlmöglichkeiten (116) sich von der weiteren Gruppe von Datenwahlmöglichkeiten (118) unterscheidet.

6. Elektronische Vorrichtung nach einem der vorhergehenden Ansprüche, wobei der Controller zum Steuern des Anzeigeschirms zum Anzeigen einer Folge von GUI-Elementen konfiguriert ist, wobei jedes GUI-Element als ein Platzhalter zum Anzeigen eines jeweiligen Dateninhalts wirkt, wobei der aktuell angezeigte Dateninhalt in einem ersten der GUI-Elemente angezeigt wird, wobei das Anzeigen des anderen Dateninhalts das Anzeigen des anderen Dateninhalts in einem zweiten der GUI-Elemente aufweist, wobei das zweite der GUI-Elemente auf das erste GUI-Element folgt.

7. Elektronische Vorrichtung nach einem der Ansprüche 3 bis 6,
- wobei jedem der GUI-Elemente der Folge von GUI-Elementen eine andere Gruppe von Datenwahlmöglichkeiten zugewiesen ist;
- wobei das Anzeigen des aktuell angezeigten Dateninhalts in den ersten GUI-Elementen das selektive Anzeigen einer ersten Gruppe von Datenwahlmöglichkeiten, die dem ersten GUI-Element auf dem Anzeigeschirm zugewiesen ist, aufweist, wobei, wenn der Controller bestimmt, dass sich das Objekt in der ersten Richtung bewegte, der Anzeigeschirm den Dateninhalt auf Basis der ersten Gruppe von Datenwahlmöglichkeiten modifiziert;
- wobei das Anzeigen des weiteren Dateninhalts in den zweiten GUI-Elementen das selektive Anzeigen einer zweiten Gruppe von Datenwahlmöglichkeiten aufweist, die dem zweiten GUI-Element auf dem Anzeigeschirm zugewiesen sind, wobei, wenn der Controller bestimmt, dass sich das Objekt in der ersten Richtung bewegte, der Anzeigeschirm den anderen Dateninhalt auf Basis der zweiten Gruppe von Datenwahlmöglichkeiten ändert.

8. Elektronische Vorrichtung nach einem der Ansprüche 3 bis 6,
- wobei jeweils nur eines der GUI-Elemente der Folge von GUI-Elementen als das aktive GUI-Element gewählt werden darf;
- wobei nur die dem aktiven GUI-Element zugewiesene Gruppe von Datenwahlmöglichkeiten angezeigt wird und als Datenbasis zum Modifizieren des in dem aktiven GUI-Element angezeigten Dateninhalts verwendet wird; und
- wobei alle Gruppen von Wahlmöglichkeiten, die einem der nichtaktiven GUI-Elemente zugewiesen sind, versteckt sind.

9. Elektronische Vorrichtung nach einem der Ansprüche 3 bis 8, wobei, wenn der Controller bestimmt, dass sich das Objekt in einer der zweiten Richtung entgegengesetzten dritten Richtung bewegte, der Controller den Anzeigeschirm zum Auswählen von einem der GUI-Elemente veranlasst, das zuvor ein aktives GUI-Element war, wobei die Auswahl zum Markieren des Dateninhalts des genannten zuvor aktivierten GUI-Elements und zum Modifizieren des in dem genannten zuvor aktivierten GUI-Element angezeigten Dateninhalts auf Basis der Gruppe von Datenwahlmöglichkeiten, die dem genannten ausgewählten und zuvor aktivierten GUI-Element zugewiesen sind, durchgeführt wird.

10. Elektronische Vorrichtung nach einem der vorhergehenden Ansprüche, wobei der Dateninhalt wenigstens eines von einem Textzeichen, einer Textzeichenfolge, die ein Phonem oder eine Silbe eines Worts repräsentiert, einem Datum, einem Monat, einem Wochentag, einem Jahr und einem Emoticon umfasst.

11. Elektronische Vorrichtung nach einem der vorhergehenden Ansprüche, wobei die Gruppe von Datenwahlmöglichkeiten durch den Controller auf Basis von Eigenschaften des Dateninhalts oder eines vorherigen Dateninhalts der Benutzeroberfläche erzeugt wird.

12. Elektronische Vorrichtung nach einem der vorhergehenden Ansprüche, wobei die Gruppe von Datenwahlmöglichkeiten durch den Controller auf Basis von Spracherkennung eines Segments von Benutzersprache erzeugt wird.

13. Verfahren zum Eingeben von Daten in eine elektronische Vorrichtung, wobei das Verfahren durch die elektronische Vorrichtung implementiert wird und Folgendes aufweist:
- Anzeigen einer Benutzeroberfläche (112) durch einen Anzeigeschirm (106);
- vertikales oder horizontales Ausrichten eines vordefinierten Bewegungsrasters (210) auf einen Anfangspunkt A, wobei der Anfangspunkt ein Punkt ist, an dem der Benutzer das Objekt (110) zuerst auf einer berührungsempfindlichen Oberfläche einer Eingabeerkennungsfläche (108) aufsetzte, so dass die genannte Ausrichtung einen Benutzer zum Einleiten eines Bewegungseingabeprozesses von irgendwo auf der berührungsempfindlichen Oberfläche der Eingabeerkennungsfläche (108) befähigt, wobei das Bewegungsraster vom Controller (102) oder der Eingabeerkennungsfläche (108) oder dem Anzeigebildschirm (106) gemäß Dimensionseinheiten vordefiniert wird, wobei das Bewegungsraster als eine erste Anzahl von Einheiten in der Y-Dimension parallel zu einer vertikalen Kante des Anzeigeschirms (106) und eine zweite Anzahl von Einheiten in der X-Dimension parallel zu einer horizontalen Kante des Anzeigeschirms aufweisend gezeigt wird, wobei die Größe des Bewegungsrasters mit einer Dimensionseinheit wie von der Anzahl von Datenwahlmöglichkeiten einer Gruppe von Datenwahlmöglichkeiten (116, 118) benötigt geändert wird, um zu vermeiden, dass das Objekt (110) aus einem Erkennungsbereich der Eingabeerkennungsfläche (108) gezwungen wird,
- Erkennen einer Vielzahl von Positionen eines Objekts (110) durch eine Eingabeerkennungsfläche, wobei die Eingabeerkennungsfläche eine berührungsempfindliche Oberfläche aufweist, wobei das Objekt wenigstens eines von einem Eingabestift, einem Finger eines Benutzers und einem Stab umfasst; und
- Verfolgen einer Position und von Bewegungen des Objekts (110) relativ zum Bewegungsraster (210), wobei die Bewegung des Objekts entlang einer vordefinierten Richtung einen Benutzer zum indirekten Auswählen einer Datenwahlmöglichkeit der Gruppe von Datenwahlmöglichkeiten (116) befähigt; und
- Steuern des Anzeigeschirms durch den Controller (102) zum Anzeigen eines Dateninhalts als Reaktion auf eine Vielzahl von Bewegungen des Objekts,
- wobei, wenn der Controller bestimmt, dass sich das Objekt in einer ersten Richtung (114) bewegte, der Anzeigeschirm den Dateninhalt auf Basis einer Gruppe von Datenwahlmöglichkeiten (116) modifiziert; und,
- wenn der Controller bestimmt, dass sich das Objekt in einer zweiten Richtung (115) bewegte, der Controller den aktuell auf dem Anzeigeschirm angezeigten Dateninhalt in den Speicher abspeichert und den Anzeigeschirm zum Anzeigen einer weiteren Gruppe von Datenwahlmöglichkeiten zum Ändern eines weiteren Dateninhalts steuert.

## Revendications

1. Dispositif électronique (100) comprenant :
- un écran d'affichage (106) affichant une interface d'utilisateur (112) ;
- une mémoire (104) ;
- une zone de détection d'entrée (108), la zone de détection d'entrée étant configurée pour la détection d'une pluralité de positions d'un objet (110), où la zone de détection d'entée comprend une surface sensible au toucher, où l'objet comprend au moins un objet parmi un stylet, un doigt d'utilisateur, et une baguette ; et
- un système de commande (102), le système de commande étant configuré pour commander l'écran d'affichage pour qu'il afficher un contenu de données en réponse à une pluralité de mouvements de l'objet,
∘ où, si le système de commande détermine que l'objet s'est déplacé dans une première direction (114), l'écran d'affichage modifie le contenu des données sur la base d'un groupe de choix de données (116), et
∘ si le système de commande détermine que l'objet s'est déplacé dans une deuxième direction (115), le système de commande stocke dans la mémoire le contenu des données étant en train d'être affichées sur l'écran d'affichage ; et
dans lequel le système de commande (102) est en outre configuré pour :
- aligner une grille des mouvements prédéfinie (210) verticalement ou horizontalement par rapport à un point initial A, le point initial étant un point où l'utilisateur a apposé l'objet (110) sur la surface sensible au toucher de la zone de détection d'entrée (108), ce par quoi ledit alignement permet à l'utilisateur d'initier le processus d'entrée du mouvement à partir de n'importe quel endroit sur la surface sensible au toucher de la zone de détection d'entrée (108), la grille des mouvements étant prédéfinie par le système de commande (102), ou par la zone de détection d'entrée (108) ou par l'écran d'affichage (106) en fonction d'unités de dimensions, la grille des mouvements étant présentée comme ayant un premier nombre d'unités dans la dimension Y parallèle à un bord vertical de l'écran d'affichage (106), et un deuxième nombre d'unité dans la dimension X parallèle à un bord horizontal de l'écran d'affichage, la grille de mouvements étant redimensionnée avec une unité de dimension telle que nécessitée par le nombre de choix de données du groupe des choix de données (116, 118) de sorte à éviter l'objet (110) étant mis de force à l'extérieur de la plage de détection de la zone de détection d'entrée (108),
- suivre la position et les mouvements de l'objet (110) par rapport à la grille de mouvements (210), le mouvement de l'objet le long d'une direction prédéfinie permettant à un utilisateur de sélectionner indirectement un choix de données du groupe des choix de données (116) ;
commander, en réponse à la détermination que l'objet s'est déplacé dans la deuxième position, à l'écran d'affichage d'afficher un autre groupe de choix de données afin de modifier un autre contenu de données.

2. Dispositif électronique selon la revendication 1, dans lequel la première direction est parallèle à un bord vertical de l'écran d'affichage et/ou où la deuxième direction est parallèle à un bord horizontal de l'écran d'affichage.

3. Dispositif électronique selon l'une quelconque des revendications précédentes, dans lequel le dispositif de commande est configuré pour :
- la détermination que l'objet est placé sur une première zone de l'écran d'affichage ;
- en réponse à ladite détermination, la commande à l'écran d'affichage d'afficher une séquence d'éléments de composant d'interface graphique GUI sur une deuxième zone de l'écran d'affichage, chacun des éléments GUI jouant le rôle d'un bouche-trou pour afficher un contenu de données ; et
la commande à l'écran d'affichage d'afficher un élément GUI de sélecteur sur une troisième zone de l'écran d'affichage ;
- où l'élément GUI de sélecteur est une représentation graphique d'un objet rotatif sur l'écran d'affichage ;
- où, pendant que l'objet exécute le mouvement dans la première direction, l'élément GUI de sélecteur se met en rotation en accord avec ledit mouvement pour procurer une information de retour visuelle sur ledit mouvement de l'objet ; et
- où la position des première, deuxième et troisième zones est calculée automatiquement par le système de commande, utilisant pour cela la taille de l'écran d'affichage comme une entrée, le calcul assurant que l'élément de sélecteur ne se superpose pas à l'un des éléments GUI de la séquence d'éléments GUI qui est en cours d'utilisation pour l'affichage et la mise à jour du contenu de données.

4. Dispositif électronique selon la revendication 3, dans lequel tous les éléments GUI sont de taille égale et où le système de commande est configuré pour :
- déterminer que n'importe quel caractère alphanumérique affiché en tant que contenu de données dans l'un quelconque desdits éléments GUI est affiché sur l'écran d'affichage ;
- agrandir automatiquement dans une sous-séquence de la séquence des éléments GUI, la sous-séquence comprenant un élément GUI actif, l'élément GUI actif comprenant le contenu de données en cours d'affichage sur l'écran d'affichage, ce par quoi, l'agrandissement augmente la taille de chacun des éléments GUI de ladite sous-séquence jusqu'à ce que les caractères affichés soient plus grands que la taille minimale prédéfinie ;
pendant le stockage du contenu de données en cours d'affichage :
- utiliser l'élément GUI succédant à l'élément GUI actif en tant qu'élément GUI actif;
- déplacer la sous-séquence affichée des éléments GUI de sorte que l'élément GUI actif est au centre de l'écran ; et
- déplacer l'élément GUI de sélecteur de sorte que la distance entre l'élément GUI actif en cours reste constante.

5. Dispositif électronique selon l'une quelconque des revendications précédentes, dans lequel le groupe de choix de données (116) diffère de l'autre choix de données (118).

6. Dispositif électronique selon l'une quelconque des revendications précédentes, dans lequel le système de commande est configuré pour commander à l'écran d'affichage d'afficher une séquence d'éléments GUI, chaque élément GUI jouant le rôle de bouche-trou pour l'affichage d'un contenu de données respectif, où le contenu de données en cours d'affichage est affiché dans un premier parmi les éléments GUI, où l'affichage de l'autre contenu de donnés comprend l'affichage de l'autre contenu de données dans un deuxième parmi les éléments GUI, le deuxième parmi les éléments GUI succédant au premier élément GUI.

7. Dispositif électronique selon l'une quelconque des revendications 3 à 6,
- dans lequel, à chacun des éléments GUI de la séquence d'éléments GUI, est associé un groupe différent de choix de données ;
- dans lequel l'affichage du contenu de données en cours d'affichage dans les premiers éléments GUI comprend l'affichage sélectif d'un premier groupe de choix de données associé au premier élément GUI sur l'écran d'affichage, où, si le système de commande détermine que l'objet s'est déplacé dans la première direction, l'écran d'affichage modifie le contenu de données sur la base du premier groupe de choix de données ;
- dans lequel l'affichage de l'autre contenu de données dans les deuxièmes éléments GUI comprend l'affichage sélectif d'un deuxième groupe de choix de données associé au deuxième élément GUI sur l'écran d'affichage, où, si le système de commande détermine que l'objet s'est déplacé dans la première direction, l'écran d'affichage modifie l'autre contenu de données sur la base du deuxième groupe de choix de données.

8. Dispositif électronique selon l'une quelconque des revendications 3 à 6,
- dans lequel uniquement un des éléments GUI de la séquence des éléments GUI est autorisé à être choisi en tant qu'élément GUI actif à un moment ;
- dans lequel uniquement le groupe de choix de données associé à l'élément GUI actif est affiché et utilisé en tant que base de données pour la modification du contenu de données affiché dans l'élément GUI actif; et
- dans lequel tous les groupes de choix de données associés à l'un quelconque des éléments GUI non actifs sont cachés.

9. Dispositif électronique selon l'une quelconque des revendications 3 à 8, dans lequel, si le système de commande détermine que l'objet s'est déplacé dans une troisième direction opposée à la deuxième direction, le système de commande fait en sorte que l'écran d'affichage choisisse un des éléments GUI ayant été l'élément GUI actif précédemment, la sélection étant réalisée pour mettre en évidence le contenu de données dudit élément GUI activé précédemment et pour modifier le contenu de données affiché dans ledit élément GUI activé précédemment sur la base du groupe de choix de données associé avec ledit élément GUI activé précédemment et choisi.

10. Dispositif électronique selon l'une quelconque des revendications précédentes, dans lequel le contenu de données comprend au moins un caractère de texte, une chaîne de texte représentant un phonème ou une syllabe d'un mot, une date, un mois, un jour de semaine, une année, et une émoticône.

11. Dispositif électronique selon l'une quelconque des revendications précédentes, dans lequel le groupe de choix de données est généré par le système de commande sur la base de propriétés du contenu de données ou d'un contenu de données précédent de l'interface d'utilisateur.

12. Dispositif électronique selon l'une quelconque des revendications précédentes, dans lequel le groupe de choix de données est généré par le système de commande sur la base d'une reconnaissance vocale d'un segment d'un discours d'utilisateur.

13. Procédé d'entrée de données dans un dispositif électronique, le procédé étant mis en oeuvre par le dispositif électronique et comprenant :
- l'affichage, par un écran d'affichage (106) d'une interface d'utilisateur (112) ;
- l'alignement d'une grille de mouvements prédéfinie (210) verticalement ou horizontalement par rapport à un point initial A, le point initial étant un point où un utilisateur a apposé l'objet (110) sur une surface sensible au toucher d'une zone de détection d'entrée (108), par quoi ledit alignement permet à l'utilisateur d'initier un processus d'entrée du mouvement à partir de n'importe quel endroit sur la surface sensible au toucher de la zone de détection d'entrée (108), la grille des mouvements étant prédéfinie par le système de commande (102) ou la zone de détection d'entrée (108) ou l'écran d'affichage (106) selon des unités de dimensions, la grille des mouvements étant présentée comme ayant un premier nombre d'unités dans la dimension Y parallèle à un bord vertical de l'écran d'affichage (106), et un deuxième nombre d'unité dans la dimension X parallèle à un bord horizontal de l'écran d'affichage, la grille de mouvements étant redimensionnée avec une unité de dimension telle que nécessitée par le nombre de choix de données d'un groupe de choix de données (116) de sorte à éviter l'objet (110) étant mis de force à l'extérieur de la plage de détection de la zone de détection d'entrée ;
- la détection, par une zone de détection d'entrée (108), d'une pluralité de positions de l'objet (110), où l'aire de détection d'entrée comprend une surface sensible au toucher, où l'objet comprend au moins un objet parmi un stylet, un doigt d'utilisateur et une baguette ;
- le suivi d'une position et de mouvements de l'objet (110) par rapport à la grille des mouvements (210), le mouvement le long d'une direction prédéfinie permettant à un utilisateur de choisir indirectement un choix de données du groupe de choix de données (116) et
- la commande, par le système de commande (102), que l'écran d'affichage affiche un contenu de données, en réponse à une pluralité de mouvements de l'objet,
- où si le système de commande détermine que l'objet s'est déplacé dans une première direction (114), l'écran d'affichage modifie le contenu de données sur la base d'un groupe de choix de données (116), et
- si le système de commande détermine que l'objet s'est déplacé dans une deuxième direction (115), le système de commande stocke, dans une mémoire (104), le contenu de données en cours d'affichage sur l'écran d'affichage et commande à l'écran d'affichage d'afficher un autre groupe de choix de données pour modifier un autre contenu de données.
